(19) 

Europäisches
Patentamt
European
Patent Office
Office européen
des brevets

(11) **EP 3 629 252 A1**

(12) **EUROPÄISCHE PATENTANMELDUNG**

(43) Veröffentlichungstag:
    **01.04.2020  Patentblatt 2020/14**

(51) Int Cl.:
    *G06N 3/08* <sup>(2006.01)</sup>       *G06N 7/00* <sup>(2006.01)</sup>

(21) Anmeldenummer: **19191560.2**

(22) Anmeldetag: **13.08.2019**

(84) Benannte Vertragsstaaten:
    **AL AT BE BG CH CY CZ DE DK EE ES FI FR GB
    GR HR HU IE IS IT LI LT LU LV MC MK MT NL NO
    PL PT RO RS SE SI SK SM TR**
    Benannte Erstreckungsstaaten:
    **BA ME**
    Benannte Validierungsstaaten:
    **KH MA MD TN**

(30) Priorität: **25.09.2018  DE 102018216298**

(71) Anmelder: **Robert Bosch GmbH
    70442 Stuttgart (DE)**

(72) Erfinder: **Groh, Konrad
    70192 Stuttgart (DE)**

(54) **VERFAHREN UND VORRICHTUNG ZUM BETREIBEN EINES STEUERUNGSSYSTEMS**

(57)     Verfahren zum computergestützten Parametrieren eines maschinellen Lernsystems (60), insbesondere eines neuronalen Netzes, welches eingerichtet ist, aus Eingangssignalen ($x$) jeweils als Ausgangssignal ($y$) eine zugehörige Klasse einer Mehrzahl von Klassen zu ermitteln, wobei das maschinelle Lernsystem (60) für unterschiedliche Randomisierungsgrade ($p$) jeweils mit einem gelabelten randomisierten Datensatz mit einem entsprechenden Anteil zufällig gewählter tatsächlichen Klassifikationen ($y_T$) trainiert wird, wobei Hyperparameter ($\theta_H$) des maschinellen Lernsystems (60) derart gewählt werden, dass eine Klassifikationsgenauigkeit des trainierten maschinellen Lernsystems (60) nicht oberhalb einer vorgebbaren oberen Schranke liegt.

**Fig. 8**

**Beschreibung**

Die Erfindung betrifft ein Verfahren zum Parametrieren eines maschinellen Lernsystems, ein Trainingssystem, ein Steuerungssystem, ein Verfahren zum Betreiben des Steuerungssystems, ein Computerprogramm und ein maschinenlesbares Speichermedium.

Stand der Technik

Aus der DE 20 2017 102 238 U ist ein Verfahren zum Trainieren eines maschinellen Lernsystems bekannt, bei dem Parameter des maschinellen Lernsystems mit einer Trainings-Menge für das maschinelle Lernsystem mit Beobachtungswerten und dazugehörigen gewünschten ersten Ausgabewerten trainiert wird.

Vorteile der Erfindung

Ein maschinelles Lernsystem, z.B. ein neuronales Netz, kann mit einer Vielzahl von Parametern beschrieben werden. Diese Parameter können unterteilt werden in Architekturparameter, wie etwa die Tiefe, die Anzahl und Form der Filter, die Wahl der Nichtlinearitäten und Verbindungen; und Optimierungsparameter, wie die Schrittweite, die Größe der Batches und die Anzahl der Iterationen. Mit anderen Worten charakterisieren Architekturparameter die Funktion *f*, wohingegen Optimierungsparameter das Optimierungsverfahren charakterisieren, das während des Trainings zum Einsatz kommt.

Die Wahl dieser Parameter kann beispielsweise auf Erfahrungswissen oder der Leistungsfähigkeit des neuronalen Netzes auf einem Validierungsdatensatz basieren. Da ein neuronales Netz i.d.R durch viel mehr Parameter parametriert ist, als Datenpunkte gegeben sind, besteht die Gefahr, dass das Netz die Trainingsdaten auswendig lernt. Ein derart trainiertes Netz ist für den Einsatz in sicherheitskritischen Funktionen, beispielsweise zum automatisierten Fahren, u.U. nicht gut geeignet, da die Ausgabe für neue Datenpunkte möglicherweise nicht gut beherrschbar ist.

Das Verfahren mit den Merkmalen des unabhängigen Anspruch 1 verhindert, dass ein maschinelles Lernsystem beim Training die Trainingsdaten auswendig lernt, d.h. es können Architektur- und/oder Optimierungsparameter durch eine Parametersuche automatisiert bestimmt werden. Die so bestimmten Architektur- und/oder Optimierungsparameter führen dazu, dass das maschinelle Lernsystem verbessert generalisieren kann.

Offenbarung der Erfindung

In einem ersten Aspekt betrifft die Erfindung daher ein Verfahren und Merkmalen des unabhängigen Anspruch 1. Weitere Aspekte sind Gegenstand der nebengeordneten Ansprüche. Vorteilhafte Weiterbildungen sind Gegenstand der abhängigen Ansprüche.

Aufgabe eines maschinellen Lernverfahrens ist es eine Funktion *f: X → Y* zu bestimmen, die für ein gegebenes *x ∈ X* ein *y ∈ Y* ausgibt. Hierbei wird davon ausgegangen, dass es eine gemeinsame (unbekannte) Verteilung *P(x,y)* über *X* und *Y* gibt. Anstelle der Verteilung ist hierbei ein Datensatz $(x_i, y_i)$ gegeben. Um die Güte der so bestimmten Funktion *f* zu bewerten, wird eine Verlustfunktion eingeführt *L: Y × Y → R*. Im Falle einer Klassifikation könnte *L* eine 1 ausgeben für eine falsche Klassifikation und eine 0 für eine richtige Klassifikation. Beim Training wird ein empirisches Risiko (Englisch "empirical risk") minimiert:

$$\frac{1}{n}\sum_{i=1}^{n} L(f(x_i), y_i) \to min \qquad (1)$$

Die Funktion *f* besteht typischerweise aus einer Reihe von Parametern *w,* diese sind beispielsweise die Gewichte eines neuronalen Netzes. Es erweist sich als günstig, neben der reinen empirical risk Minimierung, zusätzlich die Parameter zu regularisieren:

$$\frac{1}{n}\sum_{i=1}^{n} L(f(x_i), y_i) + \lambda ||w|| \to min \qquad (2)$$

Die Norm ||*w*|| kann etwa die L2 Norm der Gewichte oder die L1 Norm der Gewichte sein.

Im ersten Aspekt ist daher ein Verfahren zum computergestützten Parametrieren eines maschinellen Lernsystems (insbesondere eines neuronalen Netzes) vorgesehen, welches eingerichtet ist, aus Eingangssignalen jeweils als Ausgangssignal eine zugehörige Klasse einer Mehrzahl von Klassen zu ermitteln, wobei das maschinelle Lernsystem für unterschiedliche Randomisierungsgrade p jeweils mit einem gelabelten randomisierten Datensatz $X_r^{(p)}$ mit einem entsprechenden Anteil zufällig gewählter tatsächlichen Klassifikationen trainiert wird, wobei Hyperparameter $\theta_H$ des maschinellen Lernsystems derart gewählt werden, dass eine Klassifikationsgenauigkeit des trainierten maschinellen Lernsystems für den gelabelten randomisierten Datensatz $X_r^{(p)}$ nicht oberhalb einer vorgebbaren oberen Schranke liegt.

Wird das Training hierbei mit der beschriebenen Normierung der Gewichte durchgeführt, bewirkt dies effektiv eine Beschränkung der möglichen Konfigurationen der Gewichte, sodass eine Überanpassung (Englisch "overfitting") der Gewichte an die Trainingsdaten verhindert wird.

Hyperparameter $\theta_H$ können dadurch charakterisiert sein, dass sie beim Training des maschinellen Lernsystems unverändert gehalten werden. Die Hyperparameter $\theta_H$ können beispielsweise Architekturparameter $\theta_A$ und/oder Optimierungsparameter $\theta_O$ umfassen.

Architekturparameter $\theta_A$ charakterisieren die Struktur des maschinellen Lernsystems. Handelt es sich bei dem maschinellen Lernsystem um ein neuronales Netzwerk, umfassen die Architekturparameter $\theta_A$ beispielsweise eine Tiefe (d.h. eine Anzahl Schichten) des neuronalen Netzwerks und/oder die Anzahl von Filtern und/oder Parameter, die die Form der Filter charakterisieren und/oder Parameter, die Nichtlinearitäten des neuronalen Netzwerks charakterisieren und/oder Parameter, die charakterisieren, welche Schichten des neuronalen Netzwerks mit welchen anderen Schichten des neuronalen Netzwerks verbunden sind.

Die Optimierungsparameter $\theta_O$ sind Parameter, die das Verhalten eines Optimierungsalgorithmus zum Anpassen von Parametern $\theta$, die während des Trainings angepasst werden, charakterisieren. Beispielsweise können diese eine numerische Schrittweite und/oder eine Größe von Datenstapeln (Englisch: "batches") und/oder eine Mindest- oder Maximalanzahl Iterationen umfassen.

Nachfolgend werden Ausführungsformen der Erfindung unter Bezugnahme auf die beiliegenden Zeichnungen näher erläutert. In den Zeichnungen zeigen:

Figur 1    schematisch einen Aufbau einer Ausführungsform der Erfindung;

Figur 2    schematisch ein Ausführungsbeispiel zur Steuerung eines wenigstens teilautonomen Roboters;

Figur 3    schematisch ein Ausführungsbeispiel zur Steuerung eines Fertigungssystems;

Figur 4    schematisch ein Ausführungsbeispiel zur Steuerung eines persönlichen Assistenten;

Figur 5    schematisch ein Ausführungsbeispiel zur Steuerung eines Zugangssystems;

Figur 6    schematisch ein Ausführungsbeispiel zur Steuerung eines Überwachungssystems;

Figur 7    schematisch ein Ausführungsbeispiel zur Steuerung eines medizinisch bildgebenden Systems;

Figur 8    schematisch ein Trainingssystem;

Figur 9    in einem Flussdiagramm einen möglichen Ablauf eines Verfahrens zum Parametrieren des maschinellen Lernsystems;

Figur 10    in einem Flussdiagramm einen möglichen Ablauf zum Betreiben des maschinellen Lernsystems;

Figur 11    beispielhaft funktionale Abhängigkeiten der Klassifikationsgenauigkeit vom Randomisierungsgrad.

Beschreibung der Ausführungsbeispiele

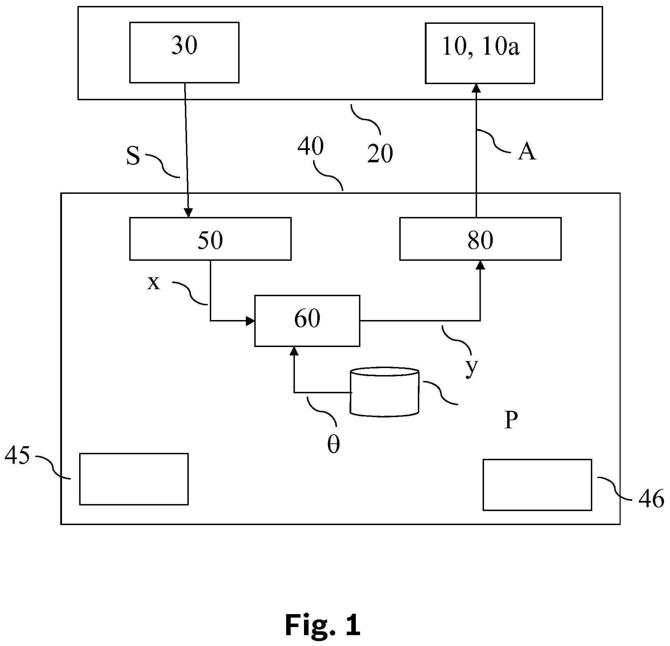

Figur 1 zeigt einen Aktor 10 in seiner Umgebung 20 in Interaktion mit einem Steuerungssystem 40. Aktor 10 und Umgebung 20 werden gemeinschaftlich auch als Aktorsystem bezeichnet. In vorzugsweise regelmäßigen zeitlichen Abständen wird ein Zustand des Aktorsystems mit einem Sensor 30 erfasst, der auch durch eine Mehrzahl von Sensoren gegeben sein kann. Das Sensorsignal S - bzw. im Fall mehrerer Sensoren je ein Sensorsignal S - des Sensors 30 wird an das Steuerungssystem 40 übermittelt. Das Steuerungssystem 40 empfängt somit eine Folge von Sensorsignalen S. Das Steuerungssystem 40 ermittelt hieraus Ansteuersignale A, welche an den Aktor 10 übertragen werden.

Das Steuerungssystem 40 empfängt die Folge von Sensorsignalen S des Sensors 30 in einer optionalen Empfangseinheit 50, die die Folge von Sensorsignalen S in eine Folge von Eingangssignalen x umwandelt (alternativ kann auch unmittelbar je das Sensorsignal S als Eingangssignal x übernommen werden). Das Eingangssignal x kann beispielsweise ein Ausschnitt oder eine Weiterverarbeitung des Sensorsignals S sein. Das Eingangssignal x kann beispielsweise Bilddaten oder Bilder umfassen, oder einzelne Frames einer Videoaufzeichnung. Mit anderen Worten wird Eingangssignal x abhängig von Sensorsignal S ermittelt. Das Eingangssignal x wird einem maschinellen Lernsystem 60, das beispielsweise ein neuronales Netzwerk ist, zugeführt.

Das maschinelle Lernsystem 60 wird vorzugsweise parametriert durch Parameter θ, die in einem Parameterspeicher P hinterlegt sind und von diesem bereitgestellt werden.

Das maschinelle Lernsystem 60 ermittelt aus den Eingangssignalen x Ausgangssignale y. Die Ausgangssignale y werden einer optionalen Umformeinheit 80 zugeführt, die hieraus Ansteuersignale A ermittelt, welche dem Aktor 10 zugeführt werden, um den Aktor 10 entsprechend anzusteuern.

Der Aktor 10 empfängt die Ansteuersignale A, wird entsprechend angesteuert und führt eine entsprechende Aktion aus. Der Aktor 10 kann hierbei eine (nicht notwendigerweise baulich integrierte) Ansteuerlogik umfassen, welches aus dem Ansteuersignal A ein zweites Ansteuersignal ermittelt, mit dem dann der Aktor 10 angesteuert wird.

In weiteren Ausführungsformen umfasst das Steuerungssystem 40 den Sensor 30. In noch weiteren Ausführungsformen umfasst das Steuerungssystem 40 alternativ oder zusätzlich auch den Aktor 10.

In weiteren bevorzugten Ausführungsformen umfasst das Steuerungssystem 40 eine Ein- oder Mehrzahl von Prozessoren 45 und wenigstens ein maschinenlesbares Speichermedium 46, auf dem Anweisungen gespeichert sind, die dann, wenn sie auf den Prozessoren 45 ausgeführt werden, das Steuerungssystem 40 veranlassen, das erfindungsgemäße Verfahren auszuführen.

In alternativen Ausführungsformen ist alternativ oder zusätzlich zum Aktor 10 eine Anzeigeeinheit 10a vorgesehen.

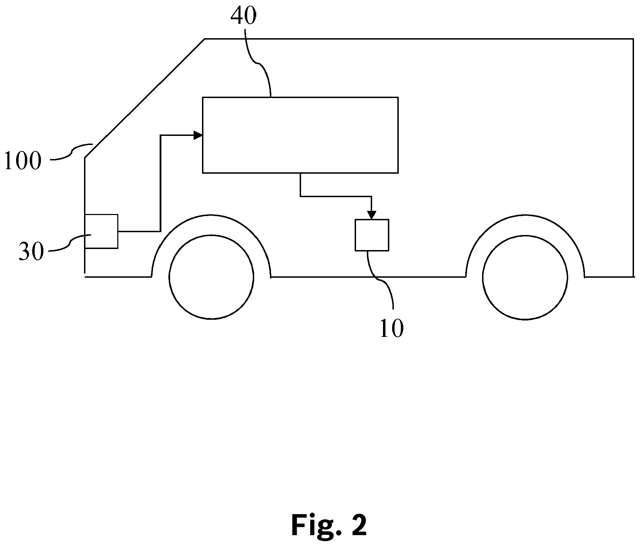

Figur 2 zeigt ein Ausführungsbeispiel, in dem das Steuerungssystem 40 zur Steuerung eines wenigstens teilautonomen Roboters, hier eines wenigstens teilautonomen Kraftfahrzeugs 100, eingesetzt wird.

Bei dem Sensor 30 kann es sich beispielsweise um einen oder mehrere vorzugsweise im Kraftfahrzeug 100 angeordnete Videosensoren und/oder einen oder mehrere Radarsensoren und/oder einen oder mehrere Ultraschallsensoren und/oder einen oder mehrere LiDAR-Sensoren und/oder einen oder mehrere Positionssensoren (beispielsweise GPS) handeln. Alternativ oder zusätzlich kann der Sensor 30 auch ein Informationssystem umfassen, das eine Information über einen Zustand des Aktorsystems ermittelt, wie beispielsweise ein Wetterinformationssystem, das einen aktuellen oder zukünftigen Zustand des Wetters in der Umgebung 20 ermittelt.

Das maschinelle Lernsystem 60 kann aus den Eingangsdaten x beispielsweise Gegenstände in der Umgebung des wenigstens teilautonomen Roboters detektieren. Bei dem Ausgangssignal y kann es sich um eine Information handeln, die charakterisiert, wo in der Umgebung des wenigstens teilautonomen Roboters Gegenstände vorhanden sind. Das Ausgangssignal A kann dann abhängig von dieser Information und/oder entsprechend dieser Information ermittelt werden.

Bei dem vorzugsweise im Kraftfahrzeug 100 angeordneten Aktor 10 kann es sich beispielsweise um eine Bremse, einen Antrieb oder eine Lenkung des Kraftfahrzeugs 100 handeln. Das Ansteuersignal A kann dann derart ermittelt werden, dass der Aktor oder die Aktoren 10 derart angesteuert wird, dass das Kraftfahrzeug 100 beispielsweise eine Kollision mit den vom maschinellen Lernsystem 60 identifizierten Gegenständen verhindert, insbesondere, wenn es sich um Gegenstände bestimmter Klassen, z.B. um Fußgänger, handelt. Mit anderen Worten kann Ansteuersignal A abhängig von der ermittelten Klasse und/oder entsprechend der ermittelten Klasse ermittelt werden.

Alternativ kann es sich bei dem wenigstens teilautonomen Roboter auch um einen anderen mobilen Roboter (nicht abgebildet) handeln, beispielsweise um einen solchen, der sich durch Fliegen, Schwimmen, Tauchen oder Schreiten fortbewegt. Bei dem mobilen Roboter kann es sich beispielsweise auch um einen wenigstens teilautonomen Rasenmäher oder einen wenigstens teilautonomen Putzroboter handeln. Auch in diesen Fällen kann das Ansteuersignal A derart ermittelt werden, dass Antrieb und/oder Lenkung des mobilen Roboters derart angesteuert werden, dass der wenigstens teilautonome Roboter beispielsweise eine Kollision mit den vom maschinellen Lernsystem 60 identifizierten Gegenständen verhindert,

In einer weiteren Alternative kann es sich bei dem wenigstens teilautonomen Roboter auch um einen Gartenroboter (nicht abgebildet) handeln, der mit einem bildgebenden Sensor 30 und dem maschinellen Lernsystem 60 eine Art oder einen Zustand von Pflanzen in der Umgebung 20 ermittelt. Bei dem Aktor 10 kann es sich dann beispielsweise um einen Applikator von Chemikalien handeln. Das Ansteuersignal A kann abhängig von der ermittelten Art oder vom ermittelten Zustand der Pflanzen derart ermittelt werden, dass eine der ermittelten Art oder dem ermittelten Zustand entsprechende Menge der Chemikalien aufgebracht wird.

In noch weiteren Alternativen kann es sich bei dem wenigstens teilautonomen Roboter auch um ein Haushaltsgerät (nicht abgebildet), insbesondere eine Waschmaschine, einen Herd, einen Backofen, eine Mikrowelle oder eine Spülmaschine handeln. Mit dem Sensor 30, beispielsweise einem optischen Sensor, kann ein Zustand eines mit dem Haushaltsgerät behandelten Objekts erfasst werden, beispielsweise im Falle der Waschmaschine ein Zustand von Wäsche, die in der Waschmaschine befindlich ist. Mit dem maschinellen Lernsystem 60 kann dann eine Art oder ein Zustand dieses Objekts ermittelt und vom Ausgangssignal y charakterisiert werden. Das Ansteuersignal A kann dann derart ermittelt werden, dass das Haushaltsgerät abhängig von der ermittelten Art oder dem ermittelten Zustand des Objekts angesteuert wird. Beispielsweise kann im Falle der Waschmaschine diese abhängig davon angesteuert werden, aus welchem Material die darin befindliche Wäsche ist. Ansteuersignal A kann dann abhängig davon gewählt werden, welches Material der Wäsche ermittelt wurde.

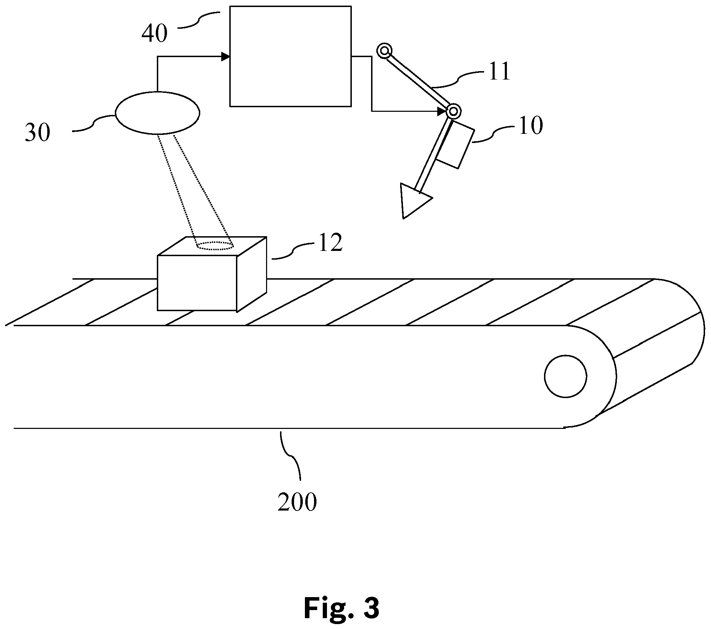

Figur 3 zeigt ein Ausführungsbeispiel, in dem das Steuerungssystem 40 zur Ansteuerung einer Fertigungsmaschine 11 eines Fertigungssystems 200 verwendet wird, indem ein diese Fertigungsmaschine 11 steuernder Aktor 10 angesteuert wird. Bei der Fertigungsmaschine 11 kann es sich beispielsweise um eine Maschine zum Stanzen, Sägen, Bohren und/oder Schneiden handeln.

Bei dem Sensor 30 dann beispielsweise um einen optischen Sensor handeln, der z.B. Eigenschaften von Fertigungserzeugnissen 12 erfasst. Es ist möglich, dass der die Fertigungsmaschine 11 steuernde Aktor 10 abhängig von den ermittelten Eigenschaften des Fertigungserzeugnisses 12 angesteuert wird, damit die Fertigungsmaschine 11 entsprechend einen nachfolgenden Bearbeitungsschritt dieses Fertigungserzeugnisses 12 ausführt. Es ist auch möglich, dass der Sensor 30 die Eigenschaften des von der Fertigungsmaschine 11 bearbeiteten Fertigungserzeugnisses 12 ermittelt, und abhängig davon eine Ansteuerung der Fertigungsmaschine 11 für ein nachfolgendes Fertigungserzeugnis anpasst.

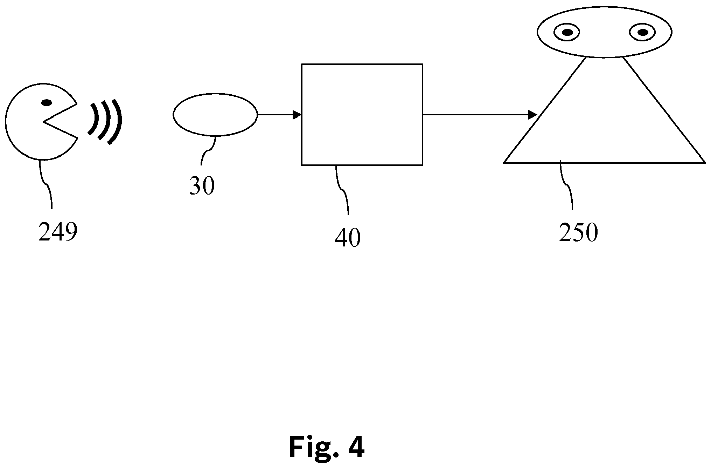

Figur 4 zeigt ein Ausführungsbeispiel, bei dem das Steuerungssystem 40 zur Steuerung eines persönlichen Assistenten 250 eingesetzt wird. Der Sensor 30 ist bevorzugt ein akustischer Sensor, der Sprachsignale eines Nutzers 249 empfängt. Alternativ oder zusätzlich kann der Sensor 30 auch eingerichtet sein, optische Signale zu empfangen, beispielsweise Videobilder einer Geste des Nutzers 249.

Abhängig von den Signalen des Sensors 30 ermittelt das Steuerungssystem 40 ein Ansteuersignal A des persönlichen Assistenten 250, beispielsweise, indem das maschinelle Lernsystem eine Gestenerkennung durchführt. Dem persönlichen Assistenten 250 wird dann dieses ermittelte Ansteuersignal A übermittelt und er somit entsprechend angesteuert. Dieses ermittelte Ansteuersignal A ist kann insbesondere derart gewählt werden, dass es einer vermuteten gewünschten Ansteuerung durch den Nutzer 249 entspricht. Diese vermutete gewünschte Ansteuerung kann abhängig von der vom maschinellen Lernsystem 60 erkannten Geste ermittelt werden. Das Steuerungssystem 40 kann dann abhängig von der vermuteten gewünschten Ansteuerung das Ansteuersignal A zur Übermittlung an den persönlichen Assistenten 250 wählen und/oder das Ansteuersignal A zur Übermittlung an den persönlichen Assistenten entsprechend der vermuteten gewünschten Ansteuerung 250 wählen.

Diese entsprechende Ansteuerung kann beispielsweise beinhalten, dass der persönliche Assistent 250 Informationen aus einer Datenbank abruft und sie für den Nutzer 249 rezipierbar wiedergibt.

Anstelle des persönlichen Assistenten 250 kann auch ein Haushaltsgerät (nicht abgebildet), insbesondere eine Waschmaschine, ein Herd, ein Backofen, eine Mikrowelle oder eine Spülmaschine vorgesehen sein, um entsprechend angesteuert zu werden.

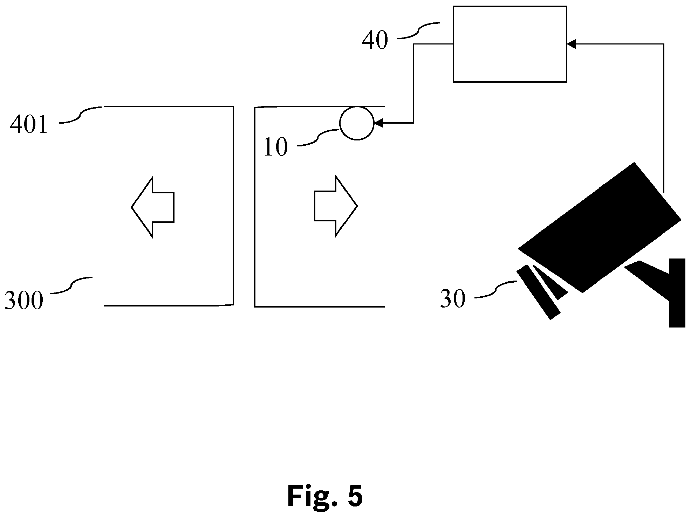

Figur 5 zeigt ein Ausführungsbeispiel, bei dem das Steuerungssystem 40 zur Steuerung eines Zugangssystems 300 eingesetzt wird. Das Zugangssystem 300 kann eine physische Zugangskontrolle, beispielsweise eine Tür 401 umfassen. Bei dem Sensor 30 kann es sich beispielsweise um einen optischen Sensor (beispielsweise zur Erfassung von Bild- oder Videodaten) handeln, der eingerichtet ist, ein Gesicht zu erfassen. Mittels des maschinellen Lernsystems 60 kann dieses erfasste Bild interpretiert werden. Beispielsweise kann die Identität einer Person ermittelt werden. Der Aktor 10 kann ein Schloss sein, dass abhängig vom Ansteuersignal A die Zugangskontrolle freigibt, oder nicht, beispielsweise die Tür 401 öffnet, oder nicht. Hierzu kann das Ansteuersignal A abhängig von der der Interpretation des maschinellen Lernsystems 60 gewählt werden, beispielsweise abhängig von der ermittelten Identität der Person. An Stelle der physischen Zugangskontrolle kann auch eine logische Zugangskontrolle vorgesehen sein.

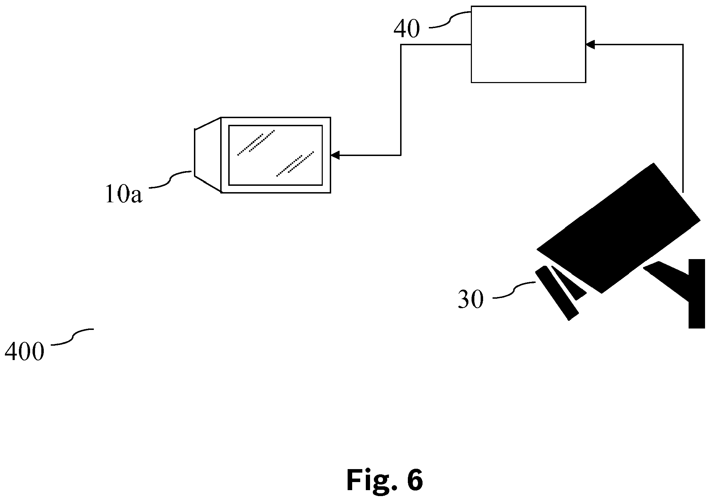

Figur 6 zeigt ein Ausführungsbeispiel, bei dem das Steuerungssystem 40 zur Steuerung eines Überwachungssystems 400 verwendet wird. Von dem in Figur 5 dargestellten Ausführungsbeispiel unterscheidet sich dieses Ausführungsbeispiel dadurch, dass an Stelle des Aktors 10 die Anzeigeeinheit 10a vorgesehen ist, die vom Steuerungssystem 40 angesteuert wird. Beispielsweise kann vom maschinellen Lernsystem 60 ermittelt werden, ob ein vom optischen Sensor aufgenommener Gegenstand verdächtig ist, und das Ansteuersignal A dann derart gewählt werden, dass dieser Gegenstand von der Anzeigeeinheit 10a farblich hervorgehoben dargestellt wird.

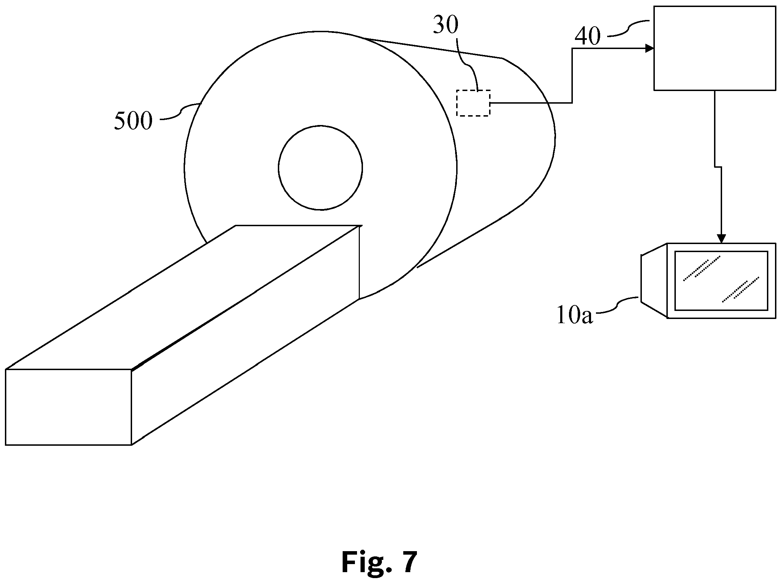

Figur 7 zeigt ein Ausführungsbeispiel, bei dem das Steuerungssystem 40 zur Steuerung eines medizinischen bildgebenden System 500, beispielsweise eines MRT-, Röntgen- oder Ultraschallgeräts, verwendet wird. Der Sensor 30 kann beispielsweise durch einen bildgebenden Sensor gegeben sein, durch das Steuerungssystem 40 wird die Anzeigeeinheit 10a angesteuert. Beispielsweise kann vom maschinellen Lernsystem 60 ermittelt werden, ob ein vom bildgebenden Sensor aufgenommener Bereich auffällig ist, und das Ansteuersignal A dann derart gewählt werden, dass dieser Bereich von der Anzeigeeinheit 10a farblich hervorgehoben dargestellt wird.

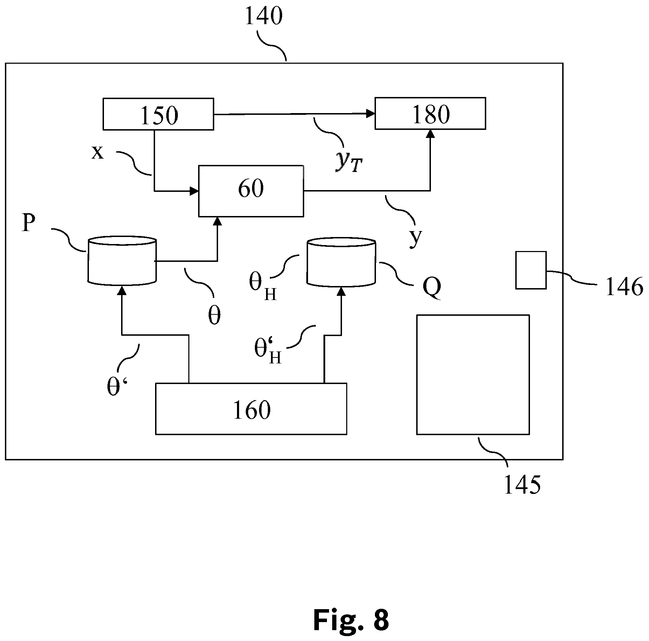

Figur 8 zeigt schematisch ein Ausführungsbeispiel eines Trainingssystems 140 zum Trainieren des maschinellen Lernsystems 60. Eine Trainingsdateneinheit 150 ermittelt geeignete Eingangssignale x, die dem maschinellen Lernsystem 60 zugeführt werden. Beispielsweise greift die Trainingsdateneinheit 150 auf eine computerimplementierte Datenbank zu, in dem ein Satz von Trainingsdaten gespeichert ist, und wählt z.B. zufällig aus dem Satz von Trainingsdaten Eingangssignale x aus. Optional ermittelt die Trainingsdateneinheit 150 auch zu den Eingangssignalen x zugeordnete gewünschte, oder "tatsächliche", Ausgangssignale $y_T$, die einer Bewertungseinheit 180 zugeführt werden.

Das künstliche neuronale Netz x ist eingerichtet, aus den ihm zugeführten Eingangssignalen x zugehörige Ausgangssignale y zu ermitteln. Diese Ausgangssignale y werden der Bewertungseinheit 180 zugeführt.

Das Trainingssystem 140 umfasst einen zweiten Parameterspeicher Q, in dem die Hyperparameter $\theta_H$ gespeichert sind.

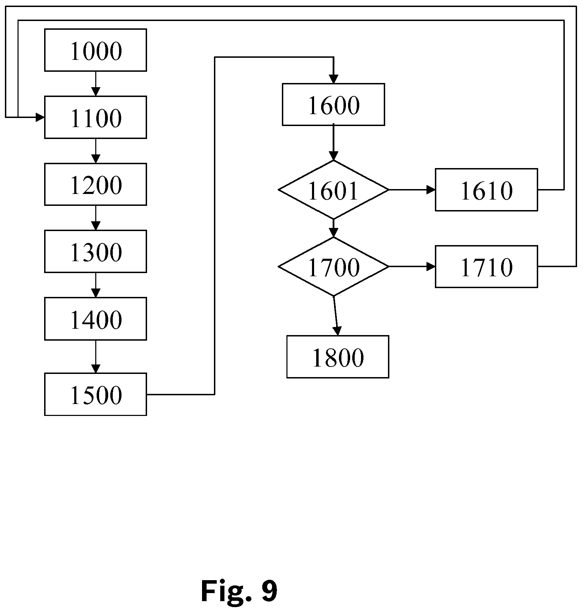

Eine Modifikationseinheit 160 ermittelt z.B. mit dem in Figur 9 illustrierten Verfahren neue Parameter θ' und führt diese dem Parameterspeicher P zu, wo sie die Parameter θ ersetzen. Die Modifikationseinheit 160 ermittelt z.B. mit dem in Figur 9 illustrierten Verfahren neue Hyperparameter θ'$_H$ und führt diese dem zweiten Parameterspeicher Q zu.

Die Bewertungseinheit 180 kann beispielsweise mittels einer von den Ausgangssignalen y und den gewünschten Ausgangssignalen $y_T$ abhängigen Kostenfunktion (Englisch: *loss function*) die Kenngröße $\mathcal{L}$ ermitteln, die eine Leistungsfähigkeit des maschinellen Lernsystems 60 charakterisiert. Die Parameter θ können abhängig von der Kenngröße $\mathcal{L}$ optimiert werden.

In weiteren bevorzugten Ausführungsformen umfasst das Trainingssystem 140 eine Ein- oder Mehrzahl von Prozessoren 145 und wenigstens ein maschinenlesbares Speichermedium 146, auf dem Anweisungen gespeichert sind, die dann, wenn sie auf den Prozessoren 145 ausgeführt werden, das Steuerungssystem 140 veranlassen, das erfindungsgemäße Verfahren auszuführen.

Figur 9 zeigt in einem Flussdiagramm den Ablauf eines Verfahrens zum Parametrieren des maschinellen Lernsystems 60 gemäß einer Ausführungsform.

Zunächst (1000) wird von der Trainingsdateneinheit 150 ein Satz gelabelter Trainingsdaten $X_C = (x_T, y_T)$ zur Verfügung gestellt. Der Wert für den Regularisierungsparameter $\lambda$ der Kostenfunktion (vgl. Formel (2)) wird auf einen vorgebbaren Initialwert gesetzt.

Dann (1100) wird mittels eines echten Zufallszahlengenerators oder eines Generators von Pseudozufallszahlen eine Teilmenge $X_T$ des Trainingsdatensatzes $X_C$ umfasst, wobei der Anteil der ausgewählten Datenpunkte einem fest vorgebbaren Anteil *p* entspricht, d.h. $\frac{|X_T|}{|X_C|} = p$. Diese Auswahl der Teilmengen erfolgt auf einem vorgebbaren diskreten Raster für Werte von *p* = 0 ... 1. Die jeweils zugehörigen Teilmengen $X_T$ werden auch als p-randomisierte Teilmenge $X_T^{(p)}$ bezeichnet.

Anschließend (1200) erfolgt für alle Werte von *p* für jede p-randomisierte Teilmenge $X_T^{(p)}$ eine Randomisierung, d.h. die Label der zugehörigen Datenpunkte des Trainingsdatensatze $X_c$ werden randomisiert, während alle übrigen Datenpunkte des Trainingsdatensatze $X_c$ unverändert bleiben. Bei der Randomisierung wird eine zufällige Permutation der Zuordnung von Eingangssignalen $x_T$ und zugehörigen Ausgangssignalen, also Klassifikationen, $y_T$ innerhalb der ausgewählten p-Teilmenge $X_T^{(p)}$ erzeugt, d.h. die Ausgangssignale $y_T$ werden vertauscht.

Alternativ oder zusätzlich können bei dieser Randomisierung auch mittels des echten Zufallszahlengenerators oder des Generators von Pseudozufallszahlen auch randomisierte Klassifikationen $y_T$ durch zufälliges Ziehen aus der Menge der möglichen Klassen erzeugt werden.

Der durch diese Randomisierung erhaltene Datensatz wird als randomisierter Datensatz $X_r^{(p)}$ bezeichnet, wobei das Superskript (p) zur Vereinfachung der Notation im Folgenden auch weggelassen wird.

Dann (1300) wird das maschinelle Lernsystem 60 mit jedem der randomisierten Datensätze $X_r^{(p)}$ auf herkömmliche Weise wie in Formel (2) illustriert trainiert, sodass sich jeweils ein eigener Satz von Parametern θ ergibt.

Anschließend (1400) wird von der Trainingsdateneinheit 150 für jedes der trainierten maschinellen Lernsysteme 60, also für jeden Randomisierungsgrad p und zugehörigen Satz von Parameter θ als Testdaten jeweils der randomisierte Datensatz $X_r^{(p)}$, der auch zum Training verwendet wurde, zugeführt. Die Eingangssignale $x = x_T$ des Testdatensatzes $X_V$ werden dem maschinellen Lernsystem 60 zugeführt.

Dann (1500) werden in der Bewertungseinheit 180 die Ausgangssignale y, und die zu den Eingangssignalen x zugeordneten tatsächlichen, also gewünschten Ausgangssignale $y_T$ bereitgestellt.

Es wird dann (1600) für alle Werte des Randomisierungsgrads *p* der Anteil der Datenpunkte ermittelt, für die Ausgangssignal y und gewünschtes Ausgangssignal $y_T$ übereinstimmen (die sogenannte Klassifikationsgenauigkeit), die ermittelte Klassifikation also korrekt ist. Wird der Anteil für p=0 mit $a_0$ und der Anteil für p=1 mit $a_1$ bezeichnet, so wird für alle Werte von p überprüft, ob für den entsprechenden Anteil $a^{(p)}$ gilt:

$$a^{(p)} \leq a_0 - (a_0 - a_1) \cdot p \qquad (3)$$

Beispielsweise ist $a_0$ = 1 und $a_1$ = 1/(Anzahl Klassen).

Abhängig davon, ob die Ungleichung (3) für alle Werte von p erfüllt ist wird entschieden (1601), wie das Verfahren fortgeführt wird. Ist die Ungleichung (3) nicht für alle Werte von p erfüllt, wird der Regularisierungsparameter $\lambda$ erhöht (1610), und es wird zurückverzweigt zu Schritt (1100). Ist Ungleichung (3) für alle Werte von p erfüllt, wird überprüft (1700), ob ein maximaler Abstand zwischen linker und rechter Seite von Ungleichung (3) hinreichend klein ist. Ist dies nicht der Fall, wird der Regularisierungsparameter $\lambda$ reduziert (1710), und es wird zurückverzweigt zu Schritt (1100). (Eine Variation anderer Hyperparameter $\theta_H$ an Stelle des Regularisierungsparameter $\lambda$ ist möglich, beispielsweise Optimierungsparameter $\theta_O$ wie eine Schrittweite eines Gradientenabstiegsverfahrens, die Stapelgröße (Englisch "batch size"), oder Architekturparameter $\theta_A$ wie eine Breite des neuronalen Netzes, Filterparameter (Größe, Schrittweite), Parameter, die nichtlineare Funktionen im maschinellen Lernsystem 60 charakterisieren, Positionen von Skip-Connections, Parameter, die Pooling-Operation charakterisieren, (Größe, Schrittweite, Art), usw.). Ist es hingegen der Fall, werden diejenigen Parameter $\theta$, die sich für den Regularisierungsparameter p=0 ergeben haben, als neue Trainingsparameter 0' dem Speicher P zugeführt. Damit endet das Verfahren (1800).

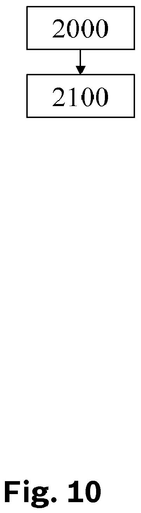

Figur 10 zeigt den Ablauf des Verfahrens zum Betreiben des maschinellen Lernsystems 60. Das maschinelle Lernsystem 60 empfängt (2000) Eingangsdaten x und ermittelt mit Hilfe einer durch die Parameter $\theta$ parametrierten Funktion *f* zugehörige Ausgangsdaten y. Abhängig von den Ausgangsdaten y können Ansteuersignale A ermittelt werden (2100). Damit endet das Verfahren.

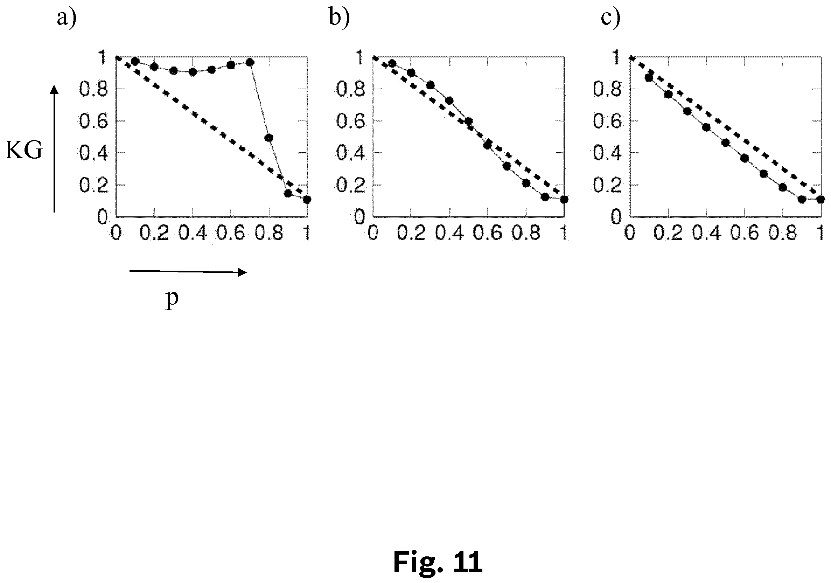

Figur 11 illustriert die Abhängigkeit der Klassifikationsgenauigkeit KG vom Randomisierungsgrad p für verschiedene Werte des Regularisierungsparameters $\lambda$. Der Randomisierungsgrad p ist mit jeweils interpolierten Punkten dargestellt, die rechte Schranke von Ungleichung (3) als gestrichelte Linie. Figur 11a) diesen Zusammenhang für einen Wert $\lambda$ = 3,36x10$^{-5}$, Figur 11b) für den Wert $\lambda$ = 6,16x10$^{-5}$, Figur 11c) für den Wert $\lambda$ = 1,1x10$^{-4}$.

Es versteht sich, dass die Verfahren nicht nur wie beschrieben vollständig in Software implementiert sein können. Sie können auch in Hardware implementiert sein, oder in einer Mischform aus Software und Hardware.

## Patentansprüche

1. Computerimplementiertes Verfahren zum Parametrieren eines maschinellen Lernsystems (60), insbesondere eines neuronalen Netzes, welches eingerichtet ist, aus Eingangssignalen (*x*) jeweils als Ausgangssignal (y) eine zugehörige Klasse einer Mehrzahl von Klassen zu ermitteln,
   wobei das maschinelle Lernsystem (60) für unterschiedliche Randomisierungsgrade (p) jeweils mit einem gelabelten randomisierten Datensatz $\left(X_r^{(p)}\right)$ mit einem entsprechenden Anteil zufällig gewählter tatsächlichen Klassifikationen ($y_T$) trainiert wird, wobei Hyperparameter ($\theta_H$) des maschinellen Lernsystems (60) derart gewählt werden, dass eine Klassifikationsgenauigkeit des trainierten maschinellen Lernsystems (60) nicht oberhalb einer vorgebbaren oberen Schranke liegt.

2. Verfahren nach Anspruch 1, wobei die vorgebbare obere Schranke abhängig vom Randomisierungsgrad (p) ist.

3. Verfahren nach Anspruch 2, wobei die Hyperparameter ($\theta_H$) derart gewählt werden, dass für eine Mehrzahl, insbesondere alle, Randomisierungsgrade (p) die Klassifikationsgenauigkeit des jeweiligen trainierten maschinellen Lernsystems (60) nicht über der jeweils vorgebbaren oberen Schranke liegt.

4. Verfahren nach Anspruch 3, wobei Hyperparameter ($\theta_H$) des maschinellen Lernsystems (60) derart gewählt werden, dass ein kumulatives Abstandsmaß, insbesondere eine Summe der Abstände, der Klassifikationsgenauigkeiten von der jeweils vorgebbaren oberen Schranke möglichst gering wird.

5. Verfahren nach Anspruch 4, wobei die vorgebbaren oberen Schranken in Abhängigkeit des Randomisierungsgrads (p) streng monoton abfallen.

6. Verfahren nach Anspruch 5, wobei die vorgebbaren oberen Schranken in Abhängigkeit des Randomisierungsgrads (p) linear abfallen.

7. Verfahren nach Anspruch 6, wobei bei gegebener Anzahl (AK) möglicher Klassen der Mehrzahl von Klassen die vorgebbaren oberen Schranken in Abhängigkeit des Randomisierungsgrads (p) den Wert $1 - (1 - AK) * p$ annehmen.

8. Trainingssystem (140), welches eingerichtet ist, das Verfahren nach einem der Ansprüche 1 bis 7 auszuführen.

9. Verfahren zum Betreiben eines Steuerungssystems (40) umfassend ein maschinelles Lernsystem (60), welches mittels des Verfahrens nach einem der Ansprüche 1 bis 7 parametriert wurde, und wobei dann abhängig von einem mittels des maschinellen Lernsystems (60) ermittelten Ausgangssignals (y) ein Ansteuerungssignal (A) ermittelt wird.

10. Verfahren nach Anspruch 9, wobei abhängig von dem ermittelten Ansteuersignal (A) ein wenigstens teilautonomer Roboter (100) und/oder ein Fertigungssystem (200) und/oder ein persönlicher Assistent (250) und/oder ein Zugangssystem (300) und/oder ein Überwachungssystem (400) oder ein medizinisch bildgebendes System (500) angesteuert wird.

11. Steuerungssystem (40) umfassend eine Ein- oder Mehrzahl von Prozessoren (45) und wenigstens ein maschinenlesbares Speichermedium (46), auf dem Anweisungen gespeichert sind, die dann, wenn sie auf den Prozessoren (45) ausgeführt werden, das Steuerungssystem (40) veranlassen, das Verfahren nach einem der Ansprüche 9 oder 10 auszuführen.

12. Verfahren zum Betreiben des Steuerungssystems (40) nach Anspruch 11, wobei das vom Steuerungssystem (40) umfasste maschinelle Lernsystem (60) zunächst mittels des Verfahrens nach einem der Ansprüche 1 bis 7 parametriert wird und anschließend das Verfahren nach Anspruch 9 oder 10 mit dem so trainierten maschinellen Lernsystem (60) ausgeführt wird.

13. Maschinelles Lernsystem (60), dessen Hyperparameter ($\theta_H$) derart gewählt sind, dass das maschinelle Lernsystem (60) besser trainiert werden kann, die tatsächlichen Klassifikationen ($y_T$) korrekt gelabelter Trainingsdaten ($X_c$) zu reproduzieren, als die tatsächlichen Klassifikationen ($y_T$) von nicht korrekt gelabelten Trainingsdaten ($X_r$).

14. Computerprogramm, das eingerichtet ist, das Verfahren nach einem der Ansprüche Anspruch 1 bis 7, oder 9, oder 10, oder 12 auszuführen.

15. Maschinenlesbares Speichermedium (46, 146), auf dem das Computerprogramm nach Anspruch 14 gespeichert ist.

**Fig. 1**

**Fig. 2**

Fig. 3

Fig. 4

**Fig. 5**

**Fig. 6**

Fig. 7

**Fig. 8**

EP 3 629 252 A1

**Fig. 9**

Fig. 10

a)    b)    c)

KG    p

**Fig. 11**

**Europäisches Patentamt**
**European Patent Office**
**Office européen des brevets**

# EUROPÄISCHER RECHERCHENBERICHT

Nummer der Anmeldung

EP 19 19 1560

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Chiyuan Zhang ET AL: "UNDERSTANDING DEEP LEARNING REQUIRES RE- THINKING GENERALIZATION", arxiv, 26. Februar 2017 (2017-02-26), Seiten 1-15, XP055644868, Gefunden im Internet: URL:https://arxiv.org/abs/1611.03530 [gefunden am 2019-11-21] * Zusammenfassung * * Abschnitt 2, Absätze 1 und 2 * * Abschnitt 2.1 * * Abbildung 1 * * Tabelle 1 * * Anhang A * ----- | 1-15 | INV. G06N3/08 G06N7/00 |
| A,D | DE 20 2017 102238 U1 (BOSCH GMBH ROBERT) 12. Mai 2017 (2017-05-12) * Ansprüche 1,4 * * Absatz [0017] - Absatz [0018] * ----- | 1-15 | |
| A | US 2017/357879 A1 (ODAIBO STEPHEN GBEJULE [US] ET AL) 14. Dezember 2017 (2017-12-14) * Abbildung 1 * * Absatz [0038] * ----- | 1-15 | RECHERCHIERTE SACHGEBIETE (IPC) G06N |

Der vorliegende Recherchenbericht wurde für alle Patentansprüche erstellt

| Recherchenort | Abschlußdatum der Recherche | Prüfer |
|---|---|---|
| Den Haag | 11. Februar 2020 | Theissing, Simon |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 19 1560

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-02-2020

| Im Recherchenbericht angeführtes Patentdokument | Datum der Veröffentlichung | Mitglied(er) der Patentfamilie | Datum der Veröffentlichung |
|---|---|---|---|
| DE 202017102238 U1 | 12-05-2017 | KEINE | |
| US 2017357879 A1 | 14-12-2017 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202017102238 U